# EUROPEAN PATENT SPECIFICATION

(11) **EP 4 206 404 B1**
(45) Date of publication and mention of the grant of the patent: **19.11.2025**
(21) Application number: 22211596.6
(22) Date of filing: 06.12.2022
(51) Int. Cl.: E02B 17/00, B63B 27/00, B63B 27/30, B63B 35/00, B63B 77/00

(54) **HOLDING DEVICE AND DISASSEMBLY METHOD FOR AQUATIC STRUCTURE**
HALTEVORRICHTUNG UND DEMONTAGEVERFAHREN FÜR WASSERSTRUKTUR
DISPOSITIF DE MAINTIEN ET PROCÉDÉ DE DÉMONTAGE POUR STRUCTURE AQUATIQUE

(30) Priority: 28.12.2021 JP 2021214531
(43) Date of publication of application: 05.07.2023
(73) Proprietor: Mitsubishi Heavy Industries, Ltd., Chiyoda-ku Tokyo 100-8332 (JP)
(72) Inventor: SHINDO, Kentaro, Tokyo 100-8332 (JP); KANEMASU, Masayuki, Tokyo 100-8332 (JP); SUZUKI, Akihito, Tokyo 100-8332 (JP); INOUE, Tomoaki, Tokyo 100-8332 (JP); NISHIGAKI, Makoto, Tokyo 100-8332 (JP); YUGE, Atsushi, Tokyo 100-8332 (JP)
(74) Representative: Studio Torta S.p.A.

(56) References cited:
- EP-A1- 3 674 199
- NO-B1- 322 435
- US-A1- 2011 119 889

## Description

### Technical Field

The present disclosure relates to a holding device and a disassembly method for an aquatic structure.

### Background Art

For example, in disassembling a land structure extending in the vertical direction such as a tower-type structure, an inexpensive disassembly method avoiding high-place work as much as possible may include a method in which the root of the structure is cut to topple the structure before disassembling the structure (as in Patent Document 1, for example). The structure is cut by using, for example, explosives or other mechanical cutting methods.

### Citation List

### Patent Document

Patent Document 1: JP 4828314 B
Patent Document 2: EP 3674199 describing a barge for decommissioning offshore structures
Patent Document 3: US 2011/119889 describing construction apparatus for construction of a floating offshore wind turbine generator in sea.
Patent Document 4: NO 322435 describing a device for transporting structures on water.

### Summary of Invention

### Technical Problem

However, when such a disassembly method is applied to a bottom-mounted aquatic structure, there is a possibility that (1) waves on the water surface generated when the structure falls down may pose a danger to surrounding ships or the like, (2) contaminants attached to the structure (e.g., broken pieces of the structure, dust, and oil) and contaminants contained in the structure may scatter or flow out into the water when and after the structure falls down and become a source of pollution, and/or (3) the fallen structure may sink into the water and cannot be recovered.

The present disclosure has been made in view of such circumstances, and an object of the present disclosure is to provide a holding device and a disassembly method by which an aquatic structure can be detached from the bottom of water before disassembly without posing a danger to surroundings and without causing contaminants attached to the aquatic structure and contaminants contained in the aquatic structure to scatter or flow out into water.

### Solution to Problem

The invention is defined by independent claims 1 and 7. Preferred embodiments of the invention follow from the dependent claims.

**In** order to solve the problems described above, the holding device and the disassembly method of the present disclosure adopt the following means.

A holding device according to one aspect of the present disclosure is a holding device for holding a bottom-mounted type aquatic structure extending from a bottom of water to above the water, and includes a floating body floating on the water, a holding portion configured to hold the aquatic structure, and a supporting portion disposed at the floating body and configured to rotatably support the holding portion about an axis. The holding portion is rotated so as to tilt over the aquatic structure.

A disassembly method according to one aspect of the present disclosure is a disassembly method for disassembling a bottom-mounted type aquatic structure using a holding device including a floating body floating on water, a holding portion configured to hold the aquatic structure, and a supporting portion disposed at the floating body and configured to rotatably support the holding portion about an axis, and includes steps of holding the aquatic structure with the holding portion, detaching the aquatic structure held by the holding portion from a bottom of water, and tilting the aquatic structure by rotating the holding portion holding the aquatic structure detached from the bottom of water about the axis on the floating body.

### Advantageous Effects of Invention

According to the present disclosure, an aquatic structure can be detached from the bottom of water and disassembled without posing a danger to surroundings and without causing contaminants attached to the aquatic structure and contaminants contained in the aquatic structure to scatter or flow out into water.

### Brief Description of Drawings

FIG. 1 is a diagram illustrating states before and after the removal of an aquatic structure.
FIG. 2 is a side view illustrating a state before a tilting step in a holding device according to a first embodiment of the present invention.
FIG. 3 is a plan view illustrating a state before the tilting step in the holding device according to the first embodiment of the present invention.
FIG. 4 is a side view illustrating a state during the tilting step in the holding device according to the first embodiment of the present invention.
FIG. 5 is a side view illustrating a state after the tilting step in the holding device according to the first embodiment of the present invention.
FIG. 6 is a side view illustrating a state during a holding step in a holding device according to a second embodiment of the present invention.
FIG. 7 is a plan view illustrating a state during the holding step in the holding device according to the second embodiment of the present invention.
FIG. 8 is a side view illustrating a state during a cutting operation in the holding device according to the second embodiment of the present invention.
FIG. 9 is a plan view illustrating a state during the cutting operation in the holding device according to the second embodiment of the present invention.
FIG. 10 is a side view illustrating a state before a tilting step in a holding device according to a third embodiment of the present invention.
FIG. 11 is a plan view illustrating a state before the tilting step in the holding device according to the third embodiment of the present invention.
FIG. 12 is a side view illustrating a state during a tilting step in a holding device according to a fourth embodiment of the present invention.
FIG. 13 is a partially enlarged view of the vicinity of a counterweight in the holding device according to the fourth embodiment of the present invention.
FIG. 14 is a side view illustrating a state during a tilting step in a holding device according to a fifth embodiment of the present invention.
FIG. 15 is a side view illustrating a state after the tilting step in the holding device according to the fifth embodiment of the present invention.

### Description of Embodiments

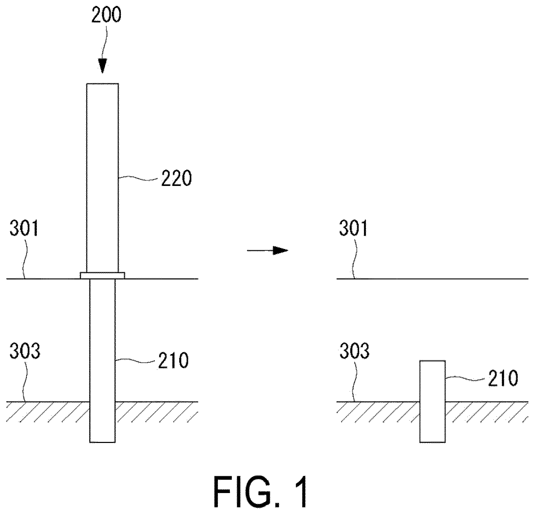

As illustrated in FIG. 1, a holding device and a disassembly method according to each embodiment of the present disclosure are a device and a method used in disassembling an aquatic structure 200.

Note that "disassembling" here means not an operation of disassembling the aquatic structure 200 itself, but an operation of detaching the aquatic structure 200 from a water bottom 303 and making the aquatic structure 200 ready for transfer from an installation location.

The aquatic structure 200 is a bottom-mounted structure extending from the water bottom 303 to above the water when mounted on the water bottom 303.

Specifically, the aquatic structure 200 is a bottom-mounted structure extending in the vertical direction (that is, having a longitudinal direction along the vertical direction) when mounted on the water bottom 303.

Examples of the aquatic structure 200 include a meteorological tower, a leg structure for an offshore facility, a lighthouse, a power transmission tower, and a windmill for power generation.

The aquatic structure 200 includes a foundation 210 and a structure body 220.

The foundation 210 extends in the vertical direction and a lower portion of the foundation 210 is driven into the water bottom 303. The foundation 210 may be a jacket-type foundation, a tripot-type foundation, or a tripile-type foundation, in addition to the illustrated monopile-type foundation. The specific form of the structure of the foundation 210 is not limited as long as the foundation 210 is a bottom-mounted type foundation.

The structure body 220 is provided at an upper portion of the foundation 210 in the vertical direction, and a portion including an upper end of the structure body 220 is exposed above a water surface 301.

The structure body 220 is a part that performs the substantial function of the aquatic structure 200. Since the structure body 220 includes equipment necessary for performing this function, the weight of the structure body 220 is often heavier than the weight of the foundation 210.

Note that in the aquatic structure 200, a boundary between the foundation 210 and the structure body 220 need not be clearly delimited.

In the following, a holding device and a disassembly method will be described in detail using a plurality of embodiments as examples.

### First Embodiment

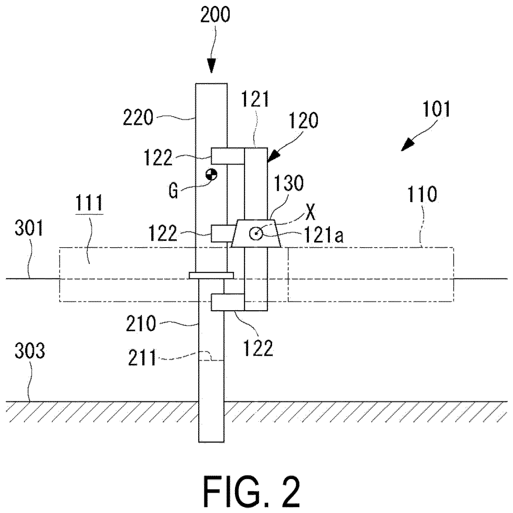

A holding device and a disassembly method according to a first embodiment of the present disclosure will be described below with reference to FIGS. 2 to 5.

### Holding Device

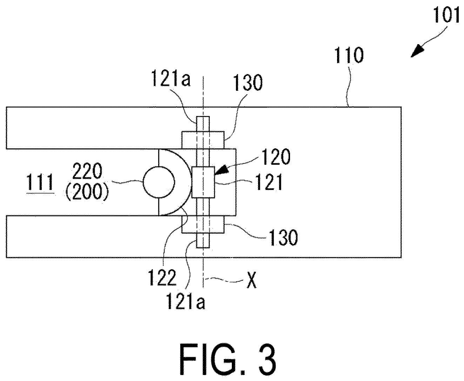

As illustrated in FIG. 2 and FIG. 3, a holding device 101 includes a floating body structure (floating body) 110, a holding mechanism (holding portion) 120, and a supporting mechanism (supporting portion) 130.

The floating body structure 110 is a part that floats in water (on water) by a buoyant force. The floating body structure 110 is designed to generate a sufficient buoyant force so as not to sink even when the entire weight of the disassembled aquatic structure 200 is applied.

As illustrated in FIG. 3, the floating body structure 110 includes a recess 111 extending in a predetermined direction. Due to the recess 111, the floating body structure 110 has a U-shape in a plan view.

As illustrated in FIG. 2 and FIG. 3, the recess 111 is a space or a gap into which the aquatic structure 200 and the holding mechanism 120 enter when the aquatic structure 200 is disassembled.

Note that the floating body structure 110 is not limited to the above-described configuration (U-shape). For example, the configuration of the floating body structure 110 may be changed by providing a mechanism configured to open and close an opening of the recess 111 such that the opening of the recess 111 is closed when the floating body structure 110 is in transit and the opening opens when the aquatic structure 200 is tilted.

Two supporting mechanisms 130 are disposed at an upper surface of the floating body structure 110.

The two supporting mechanisms 130 are disposed opposing each other across the recess 111.

The supporting mechanism 130 is a part that rotatably supports a support shaft 121a included in the holding mechanism 120.

The holding mechanism 120 is a part that holds and grips the aquatic structure 200.

As illustrated in FIG. 3, the holding mechanism 120 is disposed between the supporting mechanisms 130 that oppose each other.

As illustrated in FIG. 2 and FIG. 3, the holding mechanism 120 includes a rotating portion 121 and a holding arm 122.

The rotating portion 121 is a long structure extending in a predetermined direction.

The rotating portion 121 includes the support shaft 121a having an axis of rotation (axis) X along the horizontal direction. The support shaft 121a protrudes on both sides of the rotating portion 121.

The support shaft 121a of the rotating portion 121 is supported by the supporting mechanisms 130. Accordingly, the rotating portion 121 and thus the holding mechanism 120 are rotatably supported by the supporting mechanisms 130.

The holding arm 122 is a mechanism that holds and grips the aquatic structure 200.

The holding arm 122 is provided at a plurality of locations along an extending direction of the rotating portion 121. Accordingly, the long aquatic structure 200 can be stably held at a plurality of locations. **In** the case of FIG. 2, a total of three holding arms 122 are provided: two hold the structure body 220, and one holds the foundation 210.

Note that the holding arm 122 and the rotating portion 121 may be configured such that the holding arm 122 moves in the extending direction of the rotating portion 121 according to the dimension (height) of the aquatic structure 200.

As illustrated in FIG. 2, when the holding mechanism 120 holds/is holding the aquatic structure 200, an extending direction of the holding mechanism 120 (that is, the extending direction of the rotating portion 121) coincides with an extending direction of the aquatic structure 200.

For example, when the holding mechanism 120 holds/is holding the aquatic structure 200, which is driven into the water bottom 303 and extends in the vertical direction, the extending direction of the holding mechanism 120 coincides with the vertical direction, similar to the aquatic structure 200.

At this time, the holding mechanism 120 is disposed between the supporting mechanisms 130, and a lower portion of the holding mechanism 120 is located in the recess 111.

On the other hand, when the holding mechanism 120 is not holding the aquatic structure 200, the extending direction of the holding mechanism 120 need not coincide with the extending direction of the aquatic structure 200, and the holding mechanism 120 may be positioned such that the extending direction of the holding mechanism 120 coincides with the horizontal direction, for example.

The time when the holding mechanism 120 is not holding the aquatic structure 200 refers to, for example, a time when the holding device 101 is transferred to the vicinity of the aquatic structure 200 before the start of a disassembling operation.

In the holding device 101 configured as described above, the holding mechanism 120 rotatably supported by the supporting mechanisms 130 is rotated about the axis of rotation X of the support shaft 121a by a drive unit (not illustrated).

The drive unit includes, for example, an electric motor and a reducer including a plurality of gears.

### Disassembly Method

First, as illustrated in FIG. 2 and FIG. 3, the holding device 101 is moved such that the aquatic structure 200 enters the recess 111 of the floating body structure 110.

The holding device 101 is moved by, for example, towing by a ship. Alternatively, the holding device 101 may be provided with power so as to be self-propelled.

Next, the angle of the holding mechanism 120 is controlled such that the extending direction of the holding mechanism 120 coincides with the extending direction of the aquatic structure 200.

This angle is controlled by using the drive unit described above.

Next, the aquatic structure 200 is held by the holding arms 122 of the holding mechanism 120 (holding step). Accordingly, the aquatic structure 200 is secured to the holding mechanism 120.

Next, as illustrated in FIG. 2, a cutting operation of cutting the foundation 210 of the aquatic structure 200 is started.

During cutting, contamination control measures such as covering a portion of the foundation 210, which has a cut surface 211, with a cover may be taken.

Preferably, the position of the cut surface 211 is as close to the water bottom 303 as possible.

The reason for this is as follows. Ordinarily, the weight of the structure body 220 is heavier than the weight of the foundation 210, and the position of the center of gravity G of the aquatic structure 200 tends to be located above the axis of rotation X in the vertical direction. Thus, the position of the cut surface 211 has been contrived such that the center of gravity G of the aquatic structure 200 after being detached from the water bottom 303 is located as close to the axis of rotation X as possible to reduce the torque required for rotating the holding mechanism 120.

Note that the cutting operation of the foundation 210 may be started before the holding step, and the aquatic structure 200 may be held by the holding mechanism 120 in the middle of the cutting operation. In short, the aquatic structure 200 only needs to be held by the holding mechanism 120 before the aquatic structure 200 is completely detached from the water bottom 303.

Next, the cutting operation of the aquatic structure 200 is completed, and the aquatic structure 200 held by the holding mechanism 120 is completely detached from the water bottom 303 (cutting step). Accordingly, the system of the holding device 101 holding the aquatic structure 200 is completely separated from the water bottom 303.

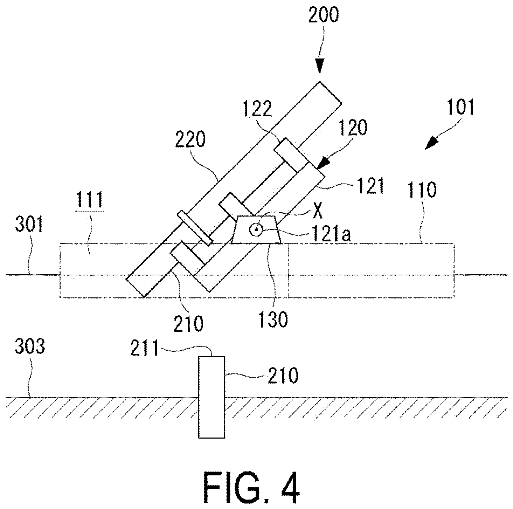

Next, as illustrated in FIG. 4, the holding mechanism 120 is rotated by using the drive unit (not illustrated) so as to tilt the aquatic structure 200 in a direction along which a cut end of the aquatic structure 200 passes through the recess 111 (a direction in which the cut end is lifted up) (tilting step).

At this time, preferably, the holding mechanism 120 is rotated by the drive unit at a low speed in order to safely tilt the aquatic structure 200.

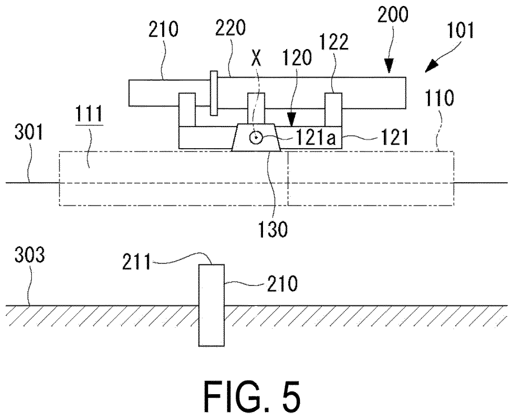

Finally, as illustrated in FIG. 5, the aquatic structure 200 is tilted until the aquatic structure 200 is placed on the floating body structure 110 with the extending direction of the aquatic structure 200 coincident with the horizontal direction.

Since the system of the holding device 101 including the aquatic structure 200 is completely separated from the water bottom 303 in a state where the aquatic structure 200 is laid down, the aquatic structure 200 can be moved to the vicinity of land together with the holding device 101.

Then, the aquatic structure 200 placed on the holding device 101 is pulled up to land by, for example, a crane installed on land, so that the aquatic structure 200 can be safely disassembled on land.

According to the present embodiment, the following effects are obtained.

That is, the holding device 101 includes the floating body structure 110 floating on the water, the holding mechanism 120 configured to hold the aquatic structure 200, and the supporting mechanisms 130 disposed at the floating body structure 110 and configured to rotatably support the holding mechanism 120 about an axis. The holding mechanism 120 is rotated such that the aquatic structure 200 is tilted, and thus, for example, the aquatic structure 200 extending in the vertical direction can be detached from the water bottom 303 and laid down on the floating body structure 110 while being held by the holding mechanism 120.

Thus, the aquatic structure 200 can be detached from the water bottom 303 in a stable state, and the detached aquatic structure 200 can be stably tilted and laid down on the floating body structure 200. In addition, for example, by placing the aquatic structure 200 on the floating body structure 110 in a laid-down state, the aquatic structure 200 can be moved to land in a stable state, and then disassembled on land.

Accordingly, the aquatic structure 200 can be detached from the water bottom 303 and disassembled without posing a danger to neighboring ships or the like and without causing contaminants attached to the aquatic structure 200 and contaminants contained in the aquatic structure 200 to scatter or flow out into water.

In addition, when the holding device 101 includes a drive unit configured to rotate the holding mechanism 120 rotatably supported by the supporting mechanisms 130, the holding mechanism 120 holding the aquatic structure 200 detached from the water bottom 303 can be freely rotated about the axis.

### Second Embodiment

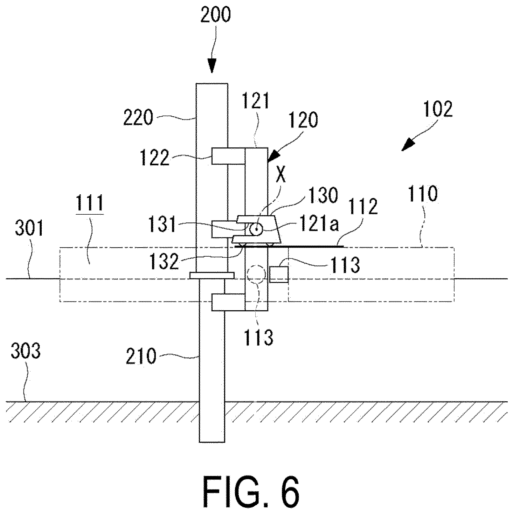

Next, a holding device and a disassembly method according to a second embodiment of the present disclosure will be described below with reference to FIGS. 6 to 9.

Note that the holding device and the disassembly method according to the present embodiment differ from those of the first embodiment in the structure of the floating body structure 110 and the structure of the supporting mechanism 130, but are identical to those of the first embodiment in other respects. Therefore, the same components are denoted by the same reference signs, and description thereof will be omitted.

Note that the holding device denoted by the reference sign 101 in the first embodiment is denoted by the reference sign 102 in the present embodiment.

### Holding Device

As illustrated in FIGS. 6 to 9, in a holding device 102, the supporting mechanism 130 is configured to temporarily release the rotatable support of the support shaft 121a.

This configuration will be described in detail below.

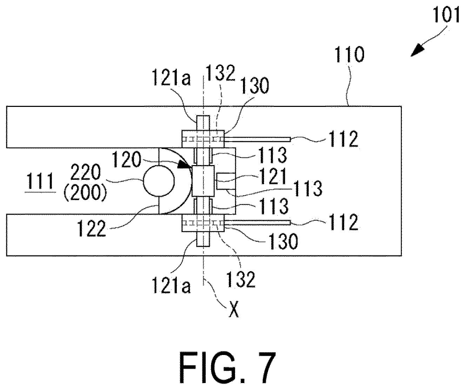

As illustrated in FIG. 6 and FIG. 7, wheels 132 are provided at a lower portion of the supporting mechanism 130. Also, two rails 112 are laid parallel on the floating body structure 110.

The supporting mechanisms 130 are placed movably along the rails 112 on the floating body structure 110 via the wheels 132.

A supporting cutout 131 is formed in the supporting mechanism 130.

The supporting cutout 131 is a U-shaped cutout extending in the horizontal direction. A semi-circular arc-shaped end of the supporting cutout 131 corresponds to the shape of the support axis 121a.

When the support shaft 121a is held by the supporting cutout 131, the support shaft 121a is rotatably supported by the supporting mechanism 130.

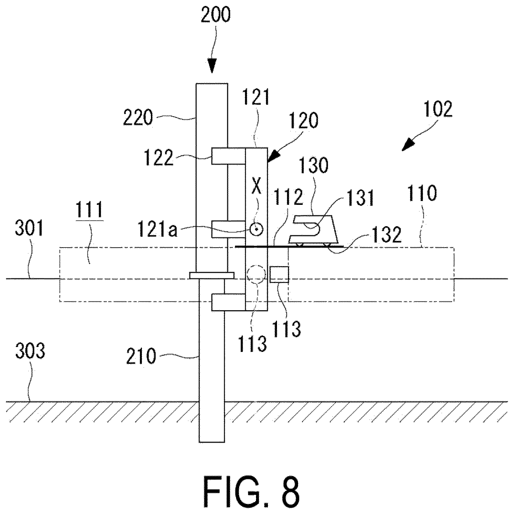

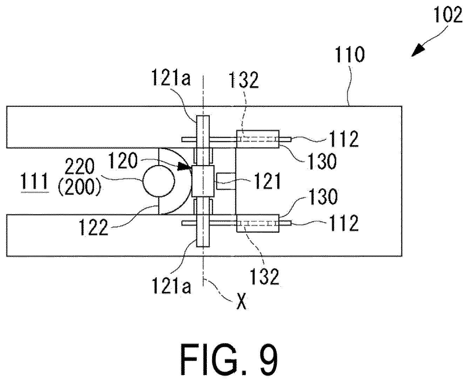

As illustrated in FIG. 8 and FIG. 9, when the supporting mechanisms 130 are moved along the rails 112, the supporting cutouts 131 also move, and thus the support shaft 121a is disengaged from the supporting cutouts 131.

This means that the supporting mechanisms 130 release the rotatable support of the support shaft 121a. That is, the supporting mechanisms 130 and the holding mechanism 120 are mechanically separated.

When the supporting mechanisms 130 and the holding mechanism 120 are mechanically separated, the system of the holding mechanism 120 holding the aquatic structure 200 is separated from the system of the floating body structure 110 including the supporting mechanisms 130.

Accordingly, rocking motions of the floating body structure 110 can be prevented from being transmitted to the holding mechanism 120, and vibrations of the holding mechanism 120 can be prevented from being transmitted to the floating body structure 110.

Note that each inside surface of the recess 111 (three surfaces in total) may be provided with a cushioning member 113 protruding toward the holding mechanism 120 (rotating portion 121).

Examples of the material of the cushioning member 113 include a rubber material such as chloroprene, and a rubber material that is commercially-available as a fender. In addition, mechanical shock absorbing means such as a hydraulic damper or a metal spring can be used, or can be used in combination with the cushioning member 113.

The cushioning member 113 is disposed with a slight gap from the rotating portion 121, or is disposed in slight contact with the rotating portion 121.

Accordingly, the system of the holding mechanism 120 is lightly secured to the system of the floating body structure 110 even after the supporting mechanism 130 releases the rotatable support of the support shaft 121a. Thus, the system of the holding mechanism 120 and the system of the floating body structure 110 can be prevented from being easily separated from each other by the effect of wind or waves, for example. In addition, vibrations between the respective systems are mitigated by the cushioning members 113.

### Disassembly Method

First, as illustrated in FIG. 6 and FIG. 7, the steps up to the holding step are similar to those in the first embodiment. Accordingly, the aquatic structure 200 is secured to the holding mechanism 120.

Next, as illustrated in FIG. 8 and FIG. 9, the supporting mechanisms 130 are moved along the rails 112 to release the rotatable support of the holding mechanism 120.

Next, a cutting operation of cutting the foundation 210 of the aquatic structure 200 is started.

At this time, since the system of the holding mechanism 120 holding the aquatic structure 200 and the system of the floating body structure 110 including the supporting mechanisms 130 are separated from each other, rocking motions of the floating body structure 110 are not transmitted to the holding mechanism 120, and vibrations of the holding mechanism 120 are not transmitted to the floating body structure 110. Accordingly, the cutting operation can be performed safely.

When the cutting operation proceeds until just before the aquatic structure 200 is completely detached from the water bottom 303, it is confirmed that the rocking motions of the floating body structure 110 are small enough not to affect the cutting operation, and then the supporting mechanisms 130 are moved along the rails 112 to rotatably support the holding mechanism 120, as illustrated in FIG. 6 and FIG. 7.

Next, the cutting operation of the aquatic structure 200 is completed, and the aquatic structure 200 held by the holding mechanism 120 is completely detached from the water bottom 303 (cutting step). Accordingly, the system of the holding device 101 holding the aquatic structure 200 is completely separated from the water bottom 303.

The steps after the cutting step are similar to those in the first embodiment, and thus descriptions thereof are omitted.

According to the present embodiment, the following effect is obtained.

Since the supporting mechanisms 130 can release the rotatable support of the holding mechanism 120 to detach the holding mechanism 120, the mechanical connection between the floating body structure 110 and the holding mechanism 120 can be temporarily released. Accordingly, the rocking motions of the floating body structure 110 can be prevented from being transmitted to the holding mechanism 120. Thus, the aquatic structure 200 can be safely detached from the water bottom 303.

### Third Embodiment

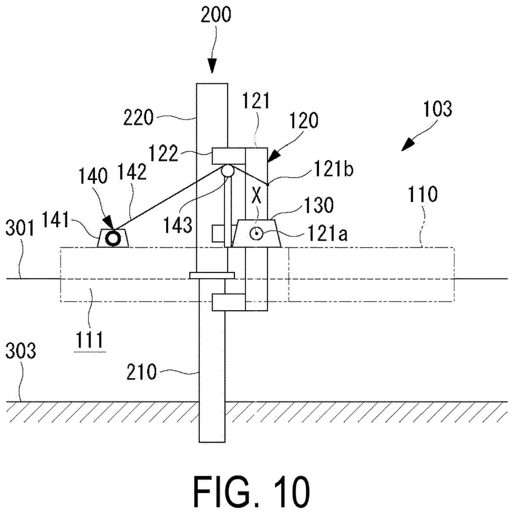

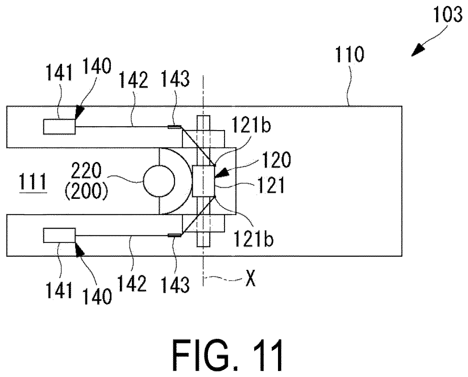

Next, a holding device and a disassembly method according to a third embodiment of the present disclosure will be described below with reference to FIG. 10 and FIG. 11.

Note that the holding device and the disassembly method according to the present embodiment include a winch (towing means) 140 and differ in this respect from the first embodiment and the second embodiment, but are identical the first embodiment and the second embodiment in other respects. Therefore, the same components are denoted by the same reference signs, and description thereof will be omitted.

Note that the holding device denoted by the reference sign 101 in the first embodiment is denoted by the reference sign 103 in the present embodiment.

As illustrated in FIG. 10 and FIG. 11, the holding device 103 includes the winch 140 including a winch body 141 and a wire 142.

The winch body 141 is a part that reels in/out the wire 142.

The winch body 141 is disposed at an upper surface of the floating body structure 110.

Two winch bodies 141 are disposed opposing each other across the recess 111 at a leading end side of the floating body structure 110.

One end of the wire 142 is connected to the winch body 141.

The other end of the wire 142 is connected to a connection point 121b of the rotating portion 121. When the holding mechanism 120 extends in the vertical direction, the connection point 121b is located above the support shaft 121a in the vertical direction.

A pulley 143 is disposed between the winch body 141 and the connection point 121b and above the connection point 121b in the vertical direction. The position of the pulley 143 is fixed with respect to the floating body structure 110.

The wire 142 is hooked onto the pulley 143. That is, the wire 142 exerts tension between the winch body 141 and the rotating portion 121 with the pulley 143 as an apex.

According to the present embodiment, the following effect is obtained.

Since the holding device 103 includes the winch 140, the holding device 130 can slow down the rotational speed of the holding mechanism 120 and reduce the output of the drive unit (not illustrated) required for rotating the holding mechanism 120.

Note that the drive unit may be omitted, and the orientation of the holding mechanism 120 may be changed by the winch 140 only.

### Fourth Embodiment

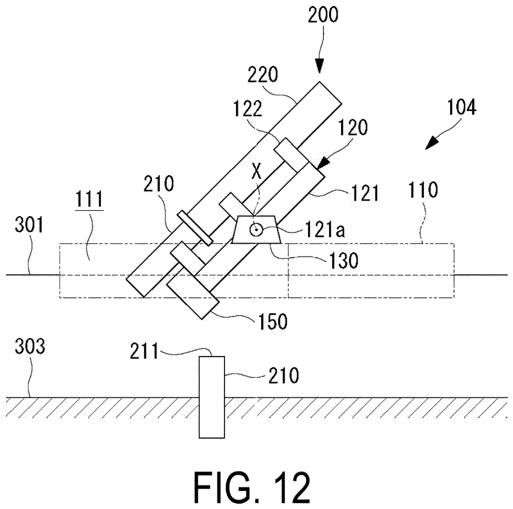

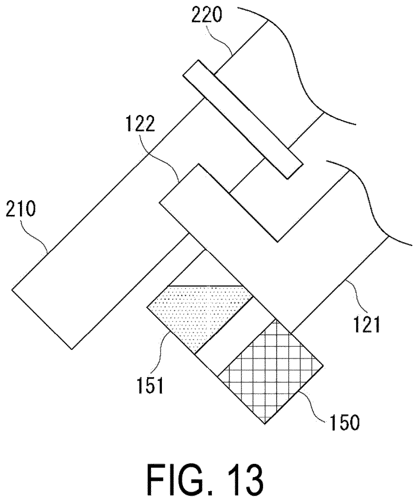

Next, a holding device and a disassembly method according to a fourth embodiment of the present disclosure will be described below with reference to FIG. 12 and FIG. 13.

Note that the holding device and the disassembly method according to the present embodiment include a counterweight 150 and differ in this respect from the first to the third embodiments, but are identical to the first to the third embodiments in other respects. Therefore, the same components are denoted by the same reference signs, and description thereof will be omitted.

Note that the holding device denoted by the reference sign 101 in the first embodiment is denoted by the reference sign 104 in the present embodiment.

As illustrated in FIG. 12 and FIG. 13, the holding device 104 includes the counterweight 150 including a ballast tank 151.

The counterweight 150 is disposed at an end portion of the rotating portion 121 located on the foundation 210 side of the aquatic structure 200.

As illustrated in FIG. 13, the ballast tank 151 has a space formed inside and is configured such that water can be poured into and drained from the space.

Water is poured and drained by, for example, a pump (not illustrated). With this configuration, the weight of the counterweight 150 can be changed.

Note that the counterweight 150 excluding the ballast tank 151 may be a simple mass body (for example, a concrete mass or a metal mass).

Preferably, the ballast tank 151 is disposed facing upward in the vertical direction as the aquatic structure 200 is tilted.

Water may be drained from the ballast tank 151 by gravity instead of a pump (not illustrated). Specifically, the ballast tank 151 may be provided with a drainage hole to cause water to naturally flow out from the drainage hole as the aquatic structure 200 is tilted.

According to the present embodiment, the following effects are obtained.

Since the holding device 104 includes the counterweight 150 disposed at the holding mechanism 120, the holding device 104 can control the position of a combined center of gravity of the aquatic structure 200 and the holding mechanism 120. Accordingly, the aquatic structure 200 can be safely tilted over.

Further, since the weight of the counterweight 150 can be changed by pouring and draining water, the position of the combined center of gravity can be controlled instantaneously while the aquatic structure 200 is being tilted. Accordingly, the aquatic structure 200 can be safely tilted over.

In addition, the rotational speed of the holding mechanism 120 can be slowed down, and the output of the drive unit (not illustrated) required for rotating the holding mechanism 120 can be reduced.

Note that the counterweight 150 may be disposed at the aquatic structure 200 (for example, at an end portion of the foundation 210) instead of at the rotating portion 121, or may be disposed at both the aquatic structure 200 and the rotating portion 121.

### Fifth Embodiment

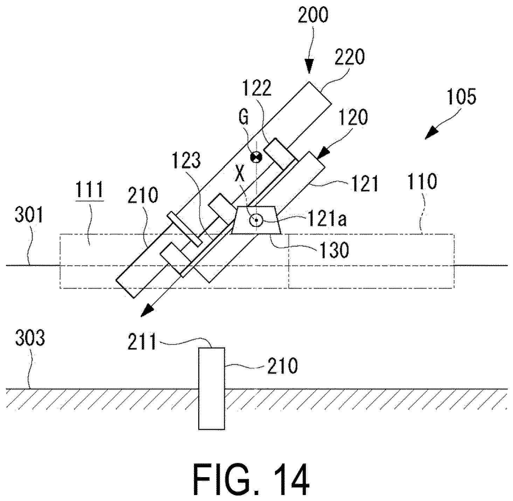

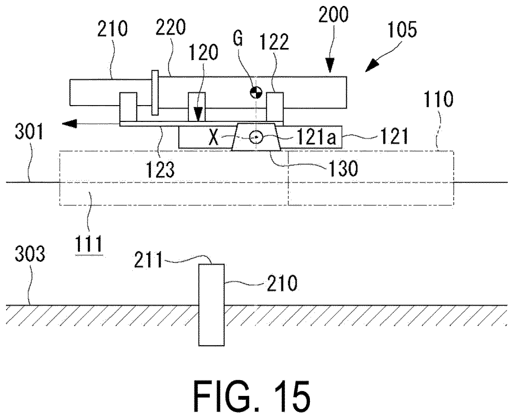

Next, a holding device and a disassembly method according to a fifth embodiment of the present disclosure will be described below with reference to FIG. 14 and FIG. 15.

Note that the holding device and the disassembly method according to the present embodiment differ from the first to the fourth embodiments in the structure of the holding mechanism 120. but are identical to the first to the fourth embodiments in other respects. Therefore, the same components are denoted by the same reference signs, and description thereof will be omitted.

Note that the holding device denoted by the reference sign 101 in the first embodiment is denoted by the reference sign 105 in the present embodiment.

### Holding Device

As illustrated in FIG. 14, the holding mechanism 120 of a holding device 105 includes a slide portion 123 in addition to the rotating portion 121 and the holding arm 122.

As in the first to fourth embodiments, the rotating portion 121 is a long structure extending in a predetermined direction.

However, unlike the first to fourth embodiments, the holding arm 122 is not directly disposed with respect to the rotating portion 121.

The slide portion 123 is a long structure extending in the same direction as the rotating portion 121.

The slide portion 123 is supported by the rotating portion 121 to be slidable along the extending direction of the rotating portion 121.

The holding arm 122 is disposed at a plurality of locations along the extending direction the slide portion 123. Accordingly, the long aquatic structure 200 can be stably held at a plurality of locations. In the case of FIG. 14, a total of three holding arms 122 are provided: two hold the structure body 220, and one holds the foundation 210.

### Disassembly Method

The steps up to the cutting step are similar to those in the first embodiment, and thus descriptions thereof are omitted.

As illustrated in FIG. 14 and FIG. 15, in the tilting step, the slide portion 123 is slid with respect to the rotating portion 121 such that the center of gravity G of the aquatic structure 200 detached from the water bottom 303 is positioned directly above the support shaft 121a. In the case of these drawings, the slide portion 123 is slid to the water bottom 303 side of the holding mechanism 120 being tilted.

According to the present embodiment, the following effects are obtained.

Since the holding mechanism 120 of the holding device 105 includes the slide portion 123 in addition to the rotating portion 121 and the holding arm 122, the center of gravity G of the aquatic structure 200 can be positioned directly above the support shaft 121a while the aquatic structure 200 is tilted. Accordingly, the aquatic structure 200 can be safely tilted over.

In addition, the rotational speed of the holding mechanism 120 can be slowed down, and the output of the drive unit (not illustrated) required for rotating the holding mechanism 120 can be reduced.

Note that, when the slide portion 123 is configured to extend in the extending direction thereof, a large-sized aquatic structure 200 can be also disassembled.

The embodiments described above can be combined as appropriate.

For example, the supporting mechanism 130 according to the second embodiment may be applied to the holding devices 103, 104, and 105, and the winch 140 according to the third embodiment may be applied to the holding devices 102, 104, and 105. The counterweight 150 according to the fourth embodiment may be applied to the holding devices 102, 103, and 105, or the holding mechanism 120 according to the fifth embodiment may be applied to the holding devices 102, 103, and 104.

The holding devices and the disassembly methods according to the embodiments described above can be understood, for example, as follows.

A holding device (101, 102, 103, 104, or 105) according to one aspect of the present disclosure is a holding device for holding a bottom-mounted aquatic structure (200) extending from a water bottom (303) to above the water, and includes a floating body (110) floating on the water, a holding portion (120) configured to hold the aquatic structure, and a supporting portion (130) disposed at the floating body and configured to rotatably support the aquatic structure about an axis (121a). The holding portion is rotated such that the aquatic structure is tilted over.

The holding device according to the present aspect includes the floating body floating on the water, the holding portion configured to hold the aquatic structure, and the supporting portion disposed at the floating body and configured to rotatably support the holding portion about the axis, and the holding portion is rotated such that the aquatic structure is tilted over. Thus, for example, the aquatic structure extending in the vertical direction can be detached from the water bottom and laid down on the floating body while being held by the holding portion. Accordingly, the aquatic structure can be detached from the water bottom in a stable state, and the cut aquatic structure can be stably tilted over and laid down on the floating body. In addition, for example, by placing the aquatic structure, which has extended in the vertical direction, on the floating body in a laid-down state, the aquatic structure can be moved to land in a stable state, and then disassembled on land.

Accordingly, the aquatic structure can be detached from the water bottom and disassembled without posing a danger to neighboring ships or the like and without causing contaminants attached to the aquatic structure and contaminants contained in the aquatic structure to scatter or flow out into water.

Examples of the aquatic structure include a meteorological tower, a leg structure of an offshore facility, a lighthouse, a power transmission tower, and a windmill.

Examples of the contaminants include broken pieces of the aquatic structure, dust, and oil.

A holding device according to one aspect of the present disclosure includes a drive unit configured to rotate the holding portion rotatably supported by the supporting portion.

The holding device according to the present aspect includes the drive unit configured to rotate the holding portion rotatably supported by the supporting portion, and thus the holding portion holding the aquatic structure detached from the water bottom can be freely rotated about the axis.

The drive unit includes, for example, an electric motor, and a reducer including a plurality of gears.

In a holding device (102) according to one aspect of the present disclosure, the supporting portion can release the rotatable support of the holding portion to detach the holding portion.

In the holding device according to the present aspect, the supporting portion can release the rotatable support of the holding portion to detach the holding portion, and thus the mechanical connection between the floating body and the holding portion can be temporarily released.

Accordingly, the rocking motions of the floating body can be prevented from being transmitted to the holding portion. Thus, the aquatic structure can be safely detached from the water bottom even when the floating body is rocking. On the other hand, even when the holding portion vibrates, the floating body can be prevented from being rocked by the vibration of the holding portion.

A holding device (103) according to one aspect of the present disclosure includes a towing means (140) including a wire (142) connected to the holding portion.

The holding device according to the present aspect includes the towing means including the wire connected to the holding portion, and thus can slow down the rotational speed of the holding portion and reduce the output of the drive unit (a motor or the like) required for rotating the holding portion.

A holding device (104) according to one aspect of the present disclosure includes a counterweight (150) disposed at the holding portion.

The holding device according to the present aspect includes the counterweight disposed at the holding portion, and thus can control the position of a combined center of gravity of the aquatic structure and the holding portion.

Accordingly, the aquatic structure can be safely tilted over. **In** addition, the rotational speed of the holding portion can be slowed down, and the output of the drive unit (a motor or the like) required for rotating the holding portion can be reduced.

In a holding device according to one aspect of the present disclosure, the weight of the counterweight can be changed by pouring and draining water.

In the holding device according to the present aspect, the weight of the counterweight can be changed by pouring and draining water, and thus the position of the center of gravity can be controlled instantaneously while the aquatic structure is being tilted.

Accordingly, the aquatic structure can be safely tilted over. In addition, the rotational speed of the holding portion can be slowed down, and the output of the drive unit (a motor or the like) required for rotating the holding portion can be reduced.

In a holding device (105) according to one aspect of the present disclosure, the holding portion includes a rotating portion (121) rotatably supported by the supporting portion, and a slide portion (123) slidably supported with respect to the rotating portion and configured to hold the aquatic structure.

In the holding device according to the present aspect, the holding portion includes the rotating portion rotatably supported by the supporting portion and the slide portion slidably supported with respect to the rotating portion and configured to hold the aquatic structure, and thus the center of gravity of the aquatic structure can be positioned directly above the axis while the aquatic structure is being tilted.

Accordingly, the aquatic structure can be safely tilted over. In addition, the rotational speed of the holding portion can be slowed down, and the output of the drive unit (a motor or the like) required for rotating the holding portion can be reduced.

A disassembly method according to one aspect of the present disclosure is a disassembly method for disassembling a bottom-mounted type aquatic structure using a holding device including a floating body floating on water, a holding portion configured to hold the aquatic structure, and a supporting portion disposed at the floating body and configured to rotatably support the holding portion about an axis, and includes steps of holding the aquatic structure with the holding portion, detaching the aquatic structure held by the holding portion from a bottom of water, and tilting the aquatic structure by rotating the holding portion holding the aquatic structure detached from the bottom of water about the axis on the floating body.

In a disassembly method according to one aspect of the present disclosure, the rotatable support of the holding portion by the supporting portion is released after the step of holding and before the step of cutting, and the holding portion is rotatably supported by the supporting portion immediately before the aquatic structure is detached from the bottom of water in the step of cutting.

In a disassembly method according to one aspect of the present disclosure, the holding device includes a counterweight disposed at the holding portion, and the weight of the counterweight is controlled in the step of tilting.

In a disassembly method according to one aspect of the present disclosure, a counterweight is disposed at the aquatic structure, and the weight of the counterweight is controlled in the step of tilting.

In a disassembly method according to one aspect of the present disclosure, the holding portion includes a rotating portion rotatably supported by the supporting portion, and a slide portion slidably supported with respect to the rotating portion and configured to hold the aquatic structure. In the step of tilting, the slide portion is slid with respect to the rotating portion such that the center of gravity of the aquatic structure is positioned directly above an axis.

In a disassembly method according to one aspect of the present disclosure, the aquatic structure is detached from the water bottom by cutting an underwater portion of the aquatic structure in the step of cutting.

### Reference Signs List

101, 102, 103, 104, 105 Holding device
110 Floating body structure (floating body)
111 Recess
112 Rail
113 Cushioning member
120 Holding mechanism (holding portion)
121 Rotating portion
121a Support shaft
121b Connection point
122 Holding arm
123 Slide portion
130 Supporting mechanism (supporting portion)
131 Supporting cutout
132 Wheel
140 Winch (towing means)
141 Winch body
142 Wire
143 Pulley
150 Counterweight
151 Ballast tank
200 Aquatic structure
210 Foundation
211 Cut surface
220 Structure body
301 Water surface
303 Water bottom

## Claims

1. A holding device (101, 102, 103, 104, 105) for holding a bottom-mounted type aquatic structure (200) extending from a bottom of water (303) to above the water (301), the holding device comprising:
a floating body (110) floating on the water;
a holding portion (120) configured to hold the aquatic structure (200); and
a supporting portion (130) disposed at the floating body (110), the supporting portion (130) being configured to rotatably support the holding portion (120) about an axis (X),
the holding portion (120) being configured to rotate such that the aquatic structure (200) is tilted over,
**characterized in that** the supporting portion (130) can release rotatable support of the holding portion (120) to detach the holding portion (120).

2. The holding device (101, 102, 103, 104, 105) according to claim 1, further comprising a drive unit configured to rotate the holding portion (120) rotatably supported by the supporting portion (130).

3. The holding device (101, 102, 103, 104, 105) according to any one of claims 1 or 2, further comprising a towing means (140) including a wire connected to the holding portion (120).

4. The holding device (101, 102, 103, 104, 105) according to any one of claims 1 to 3, further comprising a counterweight (150) disposed at the holding portion (120).

5. The holding device (101, 102, 103, 104, 105) according to claim 4, wherein weight of the counterweight (150) can be changed by pouring and draining water.

6. The holding device (101, 102, 103, 104, 105) according to any one of claims 1 to 5, wherein the holding portion (120) comprises
a rotating portion (121) rotatably supported by the supporting portion (130); and
a slide portion (123) slidably supported with respect to the rotating portion (121) and configured to hold the aquatic structure (200).

7. A disassembly method for disassembling a bottom-mounted type aquatic structure (200) using a holding device (101, 102, 103, 104, 105) including a floating body (110) floating on water, a holding portion (120) configured to hold the aquatic structure (120), and a supporting portion (130) disposed at the floating body (110) and configured to rotatably support the holding portion (120) about an axis (X), the disassembly method comprising:
holding the aquatic structure (200) with the holding portion (120);
detaching the aquatic structure (120) held by the holding portion (120) from a bottom of water (303); and
tilting the aquatic structure (200) by rotating the holding portion (120) holding the aquatic structure (200) detached from the bottom of water about the axis (X) on the floating body (110) , **characterized in that**
after the holding and before the detaching, rotatable support of the holding portion (120) by the supporting portion (130) is released, and
in the detaching, the holding portion (120) is rotatably supported by the supporting portion (130) immediately before the aquatic structure (200) is detached from the bottom of water.

8. The disassembly method according to claim 7, wherein
the holding device (101, 102, 103, 104, 105) comprises a counterweight (150) disposed at the holding portion (120), and
weight of the counterweight (150) is controlled in the tilting.

9. The disassembly method according to claim 7, wherein a counterweight (150) is disposed at the aquatic structure (200), and weight of the counterweight is controlled in the tilting.

10. The disassembly method according to any one of claims 7 to 9, wherein
the holding portion (120) comprises a rotating portion (121) rotatably supported by the supporting portion (130), and a slide portion (123) slidably supported with respect to the rotating portion (121) and configured to hold the aquatic structure (200), and
in the tilting, the slide portion (123) is slid with respect to the rotating portion (121) such that a center of gravity of the aquatic structure (200) is positioned directly above the axis (X).

11. The disassembly method according to any one of claims 7 to 10, wherein the aquatic structure (200) is detached from the bottom of water (303) by cutting an underwater portion of the aquatic structure (200) in the cutting.

## Patentansprüche

1. Haltevorrichtung (101, 102, 103, 104, 105) zum Halten einer am Boden montierten Wasserstruktur (200), die sich von einem Wasserboden (303) bis über das Wasser (301) erstreckt, wobei die Haltevorrichtung umfasst:
einen Schwimmkörper (110), der auf dem Wasser schwimmt;
einen Halteabschnitt (120), der dazu konfiguriert ist, die Wasserstruktur (200) zu halten; und
einen Stützabschnitt (130), der an dem Schwimmkörper (110) angeordnet ist, wobei der Stützabschnitt (130) so konfiguriert ist, dass er den Halteabschnitt (120) um eine Achse (X) drehbar stützt,
wobei der Halteabschnitt (120) dazu konfiguriert ist, sich so zu drehen, dass die Wasserstruktur (200) umgekippt wird,
**dadurch gekennzeichnet, dass** der Stützabschnitt (130) die drehbare Abstützung des Halteabschnitts (120) freigeben kann, um den Halteabschnitt (120) zu lösen.

2. Haltevorrichtung (101, 102, 103, 104, 105) nach Anspruch 1, die ferner eine Antriebseinheit umfasst, die so konfiguriert ist, dass sie den Halteabschnitt (120), der von dem Stützabschnitt (130) drehbar gelagert wird, dreht.

3. Haltevorrichtung (101, 102, 103, 104, 105) nach einem der Ansprüche 1 oder 2, ferner umfassend ein Schleppmittel (140), das einen Draht beinhaltet, der mit dem Halteabschnitt (120) verbunden ist.

4. Haltevorrichtung (101, 102, 103, 104, 105) nach einem der Ansprüche 1 bis 3, ferner umfassend ein Gegengewicht (150), das an dem Halteabschnitt (120) angeordnet ist.

5. Haltevorrichtung (101, 102, 103, 104, 105) nach Anspruch 4, wobei das Gewicht des Gegengewichts (150) durch Gießen und Ablassen von Wasser verändert werden kann.

6. Haltevorrichtung (101, 102, 103, 104, 105) nach einem der Ansprüche 1 bis 5, wobei der Halteabschnitt (120) Folgendes umfasst
einen Drehabschnitt (121), der drehbar von dem Stützabschnitt (130) gelagert ist; und
einen Gleitabschnitt (123), der in Bezug auf den Drehabschnitt (121) verschiebbar gelagert und so konfiguriert ist, dass er die Wasserstruktur (200) hält.

7. Demontageverfahren zum Demontieren einer am Boden montierten Wasserstruktur (200) unter Verwendung einer Haltevorrichtung (101, 102, 103, 104, 105), einschließend einen auf dem Wasser schwimmenden Körper (110), einen Halteabschnitt (120), der so konfiguriert ist, dass er die Wasserstruktur (120) hält, und einen Stützabschnitt (130), der an dem schwimmenden Körper (110) angeordnet und so konfiguriert ist, dass er den Halteabschnitt (120) um eine Achse (X) drehbar stützt, wobei das Demontageverfahren umfasst:
Halten der Wasserstruktur (200) mit dem Halteabschnitt (120);
Lösen der Wasserstruktur (120), die durch den Halteabschnitt (120) gehalten wird, von einem Boden des Wassers (303); und
Kippen der Wasserstruktur (200) durch Drehen des Halteabschnitts (120), der die vom Wasserboden gelöste Wasserstruktur (200) hält, um die Achse (X) auf dem Schwimmkörper (110), **dadurch gekennzeichnet, dass**
nach dem Halten und vor dem Lösen, die drehbare Abstützung des Halteabschnitts (120) durch den Stützabschnitt (130) freigegeben wird, und
beim Lösen wird der Halteabschnitt (120) durch den Stützabschnitt (130) drehbar gelagert, unmittelbar bevor die Wasserstruktur (200) vom Wasserboden gelöst wird.

8. Demontageverfahren nach Anspruch 7, wobei
die Haltevorrichtung (101, 102, 103, 104, 105) ein am Halteabschnitt (120) angeordnetes Gegengewicht (150) umfasst, und
das Gewicht des Gegengewichts (150) beim Kippen gesteuert wird.

9. Demontageverfahren nach Anspruch 7, wobei ein Gegengewicht (150) an der Wasserstruktur (200) angeordnet ist und das Gewicht des Gegengewichts beim Kippen gesteuert wird.

10. Demontageverfahren nach einem der Ansprüche 7 bis 9, wobei
der Halteabschnitt (120) einen Drehabschnitt (121), der drehbar durch den Stützabschnitt (130) gelagert ist, und einen Gleitabschnitt (123) umfasst, der in Bezug auf den Drehabschnitt (121) verschiebbar gelagert und so konfiguriert ist, dass er die Wasserstruktur (200) hält, und
beim Kippen wird der Gleitabschnitt (123) in Bezug auf den Drehabschnitt (121) so verschoben, dass ein Schwerpunkt der Wasserstruktur (200) direkt über der Achse (X) positioniert wird.

11. Demontageverfahren nach einem der Ansprüche 7 bis 10, wobei die Wasserstruktur (200) vom Wasserboden (303) gelöst wird, indem ein Unterwasserabschnitt der Wasserstruktur (200) beim Schneiden abgeschnitten wird.

## Revendications

1. Dispositif de maintien (101, 102, 103, 104, 105) pour maintenir une structure aquatique (200) montée sur le fond, s'étendant du fond de l'eau (303) à au-dessus de l'eau (301), le dispositif de maintien comprenant :
un corps flottant (110) flottant sur l'eau ;
une partie de maintien (120) configurée pour maintenir la structure aquatique (200) ; et
une partie de support (130) disposée au niveau du corps flottant (110), la partie de support (130) étant configurée pour supporter de manière rotative la partie de maintien (120) autour d'un axe (X),
la partie de maintien (120) est configurée pour tourner de manière à faire basculer la structure aquatique (200),
**caractérisé en ce que** la partie de support (130) peut libérer le support rotatif de la partie de maintien (120) pour détacher la partie de maintien (120).

2. Dispositif de maintien (101, 102, 103, 104, 105) selon la revendication 1, comprenant en outre une unité d'entraînement configurée pour faire tourner la partie de maintien (120) supportée de manière rotative par la partie de support (130).

3. Dispositif de maintien (101, 102, 103, 104, 105) selon l'une quelconque des revendications 1 ou 2, comprenant en outre un moyen de remorquage (140) comportant un câble relié à la partie de maintien (120).

4. Dispositif de maintien (101, 102, 103, 104, 105) selon l'une quelconque des revendications 1 à 3, comprenant en outre un contrepoids (150) disposé au niveau de la partie de maintien (120).

5. Dispositif de maintien (101, 102, 103, 104, 105) selon la revendication 4, dans lequel le poids du contrepoids (150) peut être modifié en versant et en vidant de l'eau.

6. Dispositif de maintien (101, 102, 103, 104, 105) selon l'une quelconque des revendications 1 à 5, dans lequel la partie de maintien (120) comprend
une partie rotative (121) supportée de manière rotative par la partie de support (130) ; et
une partie coulissante (123) supportée de manière coulissante par rapport à la partie rotative (121) et configurée pour maintenir la structure aquatique (200).

7. Méthode de désassemblage pour désassembler une structure aquatique (200) montée sur le fond à l'aide d'un dispositif de maintien (101, 102, 103, 104, 105) comprenant un corps flottant (110) flottant sur l'eau, une partie de maintien (120) configurée pour maintenir la structure aquatique (120), et une partie de support (130) disposée au niveau du corps flottant (110) et configurée pour supporter de manière rotative la partie de maintien (120) autour d'un axe (X), la méthode de désassemblage comprenant :
le maintien de la structure aquatique (200) avec la partie de maintien (120) ;
le détachement de la structure aquatique (120) maintenue par la partie de maintien (120) du fond de l'eau (303) ; et
le basculement de la structure aquatique (200) en faisant tourner la partie de maintien (120) maintenant la structure aquatique (200) détachée du fond de l'eau autour de l'axe (X) sur le corps flottant (110), **caractérisé en ce que**
après le maintien et avant le détachement, le support rotatif de la partie de maintien (120) par la partie de support (130) est relâché, et
lors du détachement, la partie de maintien (120) est supportée de manière rotative par la partie de support (130) juste avant que la structure aquatique (200) ne soit détachée du fond de l'eau.

8. Méthode de désassemblage selon la revendication 7, dans laquelle
le dispositif de maintien (101, 102, 103, 104, 105) comprend un contrepoids (150) disposé au niveau de la partie de maintien (120), et
le poids du contrepoids (150) est contrôlé lors du basculement.

9. Méthode de désassemblage selon la revendication 7, dans laquelle un contrepoids (150) est disposé au niveau de la structure aquatique (200), et le poids du contrepoids est contrôlé lors du basculement.

10. Méthode de désassemblage selon l'une quelconque des revendications 7 à 9, dans laquelle
la partie de maintien (120) comprend une partie rotative (121) supportée de manière rotative par la partie de support (130), et une partie coulissante (123) supportée de manière coulissante par rapport à la partie rotative (121) et configurée pour maintenir la structure aquatique (200), et
lors du basculement, la partie coulissante (123) est glissée par rapport à la partie rotative (121) de manière à ce que le centre de gravité de la structure aquatique (200) soit positionné directement au-dessus de l'axe (X).

11. Méthode de désassemblage selon l'une quelconque des revendications 7 à 10, dans laquelle la structure aquatique (200) est détachée du fond de l'eau (303) en coupant une partie immergée de la structure aquatique (200) lors de la coupe.
